# EUROPEAN PATENT SPECIFICATION

(11) **EP 1 712 413 B1**
(45) Date of publication and mention of the grant of the patent: **02.09.2009**
(21) Application number: 06007918.3
(22) Date of filing: 14.04.2006
(51) Int. Cl.: B60P 3/20, B60P 3/04

(54) **Transport vehicle as well as a method for ventilating a compartment of a transport vehicle**
Transportfahrzeug und Verfahren zur Belüftung eines Transportfahrzeugs
Véhicule de transport et procédé de ventilation d'un véhicule de transport

(30) Priority: 15.04.2005 US 107310
(43) Date of publication of application: 18.10.2006
(73) Proprietor: Mennen, Adrianus H. M., 5756 PP Vlierden (NL)
(72) Inventor: Mennen, Adrianus H. M., 5756 PP Vlierden (NL)
(74) Representative: Verhees, Godefridus Josephus Maria

(56) References cited:
- WO-A-02/16164
- WO-A-03/031224
- US-A- 4 454 837
- US-B1- 6 581 544
- US-B1- 6 817 316

## Description

### BACKGROUND OF THE INVENTION:

### Field of the invention

The invention relates to a transport vehicle, in particular for transporting chickens, comprising a compartment with, as viewed in the direction of travel, a front wall and a rear wall, as well as a roof, a floor and two side walls, which transport vehicle, furthermore, comprises at least one ventilating fan, situated in or on the front wall, as well as at least one air vent in one of the compartment's walls, for taking in air, the ventilating fan is set up in such a way that it extracts air from the compartment, whereby the transport vehicle comprises at least one further ventilating fan, situated in or on the rear wall of the compartment.

The front in this situation is the upstream side with respect to the flow of air during transport. By a ventilating fan situated in or near an opening in the front wall is also meant a ventilating fan situated on the front wall and connected to the space in the compartment by means of an opening in the wall.

### Prior art

Such a transport vehicle is known from US-B1-6 581 544. It has been found that during cold weather the temperature in the rear of the compartment gets too cold for the animals so that a lot of the animals in the rear of the compartment will die.

### Summary of the invention

An objective of the invention is to provide a transport vehicle of the type described in the preamble in which.ventilation of the compartment is improved. To this end, the transport vehicle according to the invention is **characterized in that** the further ventilating fan is set up in such a way that it extracts air from the compartment. Instead of exhausting air only through openings in the front wall, whereby the air is taken in through openings in the rear wall of the compartment, the air is alternately exhausted through openings in the front and rear wall whereby the air is alternately taken in through openings in the opposite wall. The air vents in the front and rear walls can be formed by the ventilating fans. Because of this the temperature in the compartment and especially in the rear of the compartment will be less low than in case air is only exhausted through openings in the front wall of the compartment.

During circumstances when temperature is not low the air is only exhausted by the ventilating fan in the front wall of the compartment. In that case the openings in the rear wall wherein the further ventilating fans are present can be closed and the air is taken in through other adjustable venting openings in the rear wall.

Preferably the transport vehicle comprises means for alternately activating the air fans in or on the front and the rear wall of the compartment. An embodiment is **characterized in that** there are a number of floors in the compartment and in addition to the ventilating fan mentioned, the transport vehicle comprises a number of additional ventilating fans which are distributed vertically in the front wall, and in addition to the further ventilating fan mentioned, a number of additional further ventilating fans, which are distributed vertically in the rear wall and which transport vehicle in addition to the air vent mentioned, comprises a number of additional air vents which are distributed vertically in the rear wall adjacent the further ventilating fans. , whereby the rear wall is executed preferably as one or more doors and there is a moveable closing device in the compartment at the rear for closing off a part of the rear from the floor upwards when the doors are open and a moving resistance device, through which the air flowing into the compartment encounters resistance, for covering a part of the rear from the roof downwards when the doors are open. The resistance device is preferably a perforated plastic covering. When the transport vehicle is being loaded and the uppermost floor is loaded first, the closing device can be used for the floors lying below. Because of this, the air drawn in flows through the uppermost floor. If the floors lying below were not closed off, all the air drawn in would be drawn in through these empty floors because the air encounters less resistance there. In that case, the uppermost floor where chickens are already situated would not be ventilated or would be insufficiently ventilated. The advantage of the resistance device, which will cover that part of the rear above the floor which is loaded, is that the air speed in the upper floors is not too high and sufficient air will be drawn in through the flood being loaded. Preferably the closing device comprises a plastic covering which can be rolled up and which extends over the entire width of the compartment.

The invention also relates to a method for ventilating a compartment of a transport vehicle, which compartment as seen in the direction of travel, has a front wall and a rear wall, as well as a roof, a floor and two side walls, in which method air is extracted from the compartment through openings in the front wall of the compartment. As to the method, the invention is **characterized in that** air is also extracted from the compartment through openings in the rear wall of the compartment, whereby the air is extracted alternately during a period through the openings in the front wall and a period through the openings in the rear wall.

An embodiment of the method is **characterized in that** just after the compartment is filled with animals and the rear door or doors is/are closed first the air is exhausted through the openings in the rear wall during a longer period than during the alternately venting through the openings in the front and rear wall.

### Brief description of the drawings

The invention will be elucidated more fully below on the basis of drawings in which an embodiment of the transport vehicle according to the invention is shown. In these drawings:
Figure 1 is a side view of an embodiment of the transport vehicle according to the invention in which the compartment is shown in cross-section;
Figure 2 is a view from above of a front part of the transport vehicle's compartment;
Figure 3 is a front view of the compartment; and
Figure 4 is a rear view of the compartment.

### Detailed description of the drawings

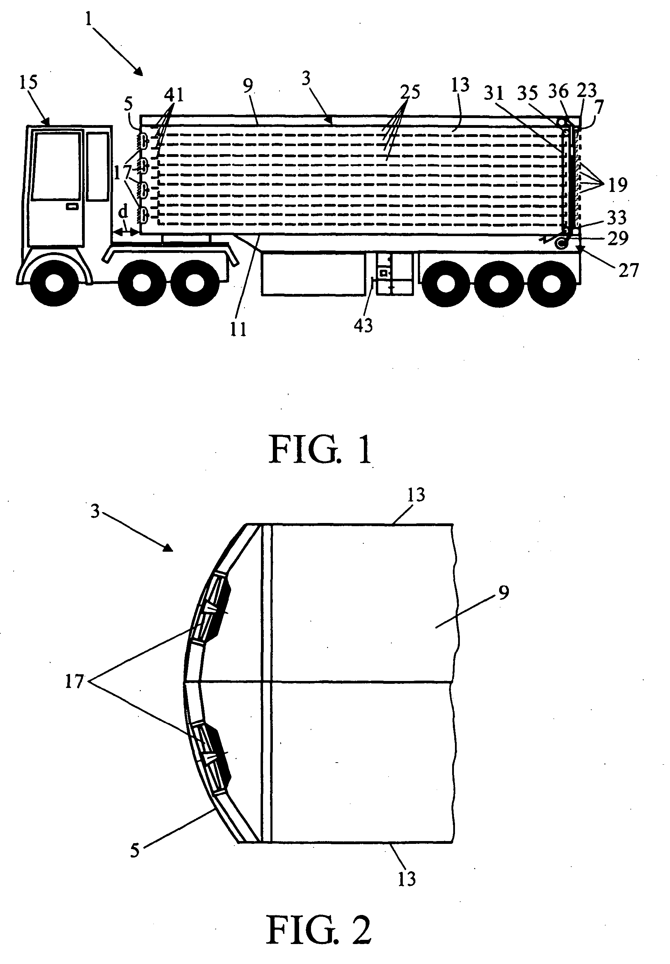

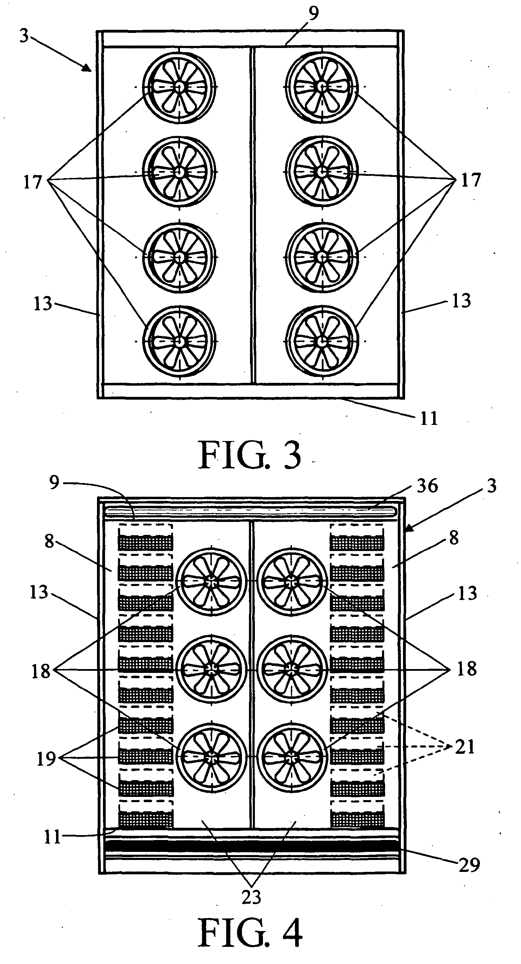

In Figure 1 an embodiment of the transport vehicle 1 according to the invention is shown in a side view. The transport vehicle is suitable for transporting chickens and has a compartment 3 with a front wall 5, a rear wall 7, a roof 9, a floor 11 and two side walls 13. For the sake of clarity, the compartment is shown here in cross-section. The transport vehicle 1, furthermore, has a cab 15 situated in front of and at a distance d from the compartment 3. There are eight ventilating fans 17 in openings in the front wall 5 of the compartment 3, which are situated behind the cab 15 in openings in the front wall 5. Further there are six further ventilating fans 18 in openings in the rear wall 7 of the compartment 3. These six further ventilating fans 18 have the same overall venting capacity as the eight ventilating fans 17 in the front wall 5. The ventilating fans are set up in such a way that they extract air from the compartment 3 and blow it outside. In Figures 2 and 3, the position of the ventilating fans 17 in the front wall 5 and in figure 4 the position of the further ventilating fans 18 in the rear wall 7 can be seen clearly.

The rear wall 7 of the compartment 3 is made up of two doors 8, see Figures 1 and 4. In the rear wall 7 there are a number of air vents 19 for letting fresh air in. The size of the air vents 19 can be adjusted by means of sliding devices 21 (see Figure 4), which can be slid in front of the air vents 19. There is a sponge 23 made of plastic wire in front of the air vents 19 on the inner side of the rear wall 7. This sponge 23 is a resistance device through which the air flowing into the compartment encounters resistance. The roof 9, the floor 11 and the side walls 13 are closed.

There are a number of floors 25 in the compartment, see Figure 1. In the compartment 3 at the rear there is a moveable closing device 27 for closing off a part of the rear from the floor 11 upwards. This closing device 27 comprises a plastic covering 29 that can be rolled up and which extends over the entire width of the compartment 3. One end of the plastic covering 29 is attached to cables 31 near the side walls 13 of the compartment 3, which are led round two wheels 33 and 35 at the top and bottom of the compartment 3. One of the wheels 33 can be driven in order to raise or lower the plastic covering 29.

In the compartment 3 at the rear there is further a moving resistance device 36, made of a perforated plastic covering, through which the air flowing into the compartment 3 encounters resistance, for covering a part of the rear from the roof 9 downwards when the doors 8 are open.

For regulating the ventilating fans 17, there are temperature sensors 41 on each floor 25 of the compartment 3 as well as a sensor for the outside temperature 43.

During circumstances when temperature is not low, for example above 5 degrees Celsius, the air is only exhausted by the ventilating fans 17 in the front wall 5 of the compartment 3. In that case the openings in the rear wall 7 wherein the further ventilating fans 18 are present are closed and the air is taken in through the adjustable air vents 19 in the rear wall 7.

During circumstances when temperature is low, for example below 5 degrees Celsius, the air is alternately, for example during periods of 3 minutes, exhausted through openings in the front and rear wall 5, 7 whereby the air is alternately taken in through openings in the opposite wall. The air vents in the front and rear walls 5, 7 are in that case formed by the openings in which the ventilating fans 17, 18 and the adjustable air vents 19 in the rear wall 7 are closed. Because of this the temperature in the compartment and especially in the rear of the compartment will be less low than in case air is only exhausted through openings in the front wall of the compartment 3.

During loading of the compartment in case the outside temperature is low only the ventilating fans 17 in the front wall 5 are operative. After the compartiment is loaded the doors 8 are closed and during a time longer than 3 minutes only the further ventilating fans 18 in the rear wall 7 are operative to increase the temperature in the rear of the compartment 3.

Although in the above the invention is explained on the basis of the drawings, it should be noted that the invention is in no way limited to the embodiment shown in the drawings. The invention also extends to all embodiments deviating from the embodiment shown in the drawings within the context defined by the claims.

## Claims

1. Transport vehicle (1), in particular for transporting chickens, comprising a compartment (3) with, as viewed in the direction of travel, a front wall (5) and a rear wall (7), as well as a roof (9), a floor (11) and two side walls (13), which transport vehicle (1), furthermore, comprises at least one ventilating fan (17), situated in or on the front wall (5), as well as at least one air vent (19) in one of the compartment's walls, for taking in air, the ventilating fan (17) is set up in such a way that it extracts air from the compartment (3), whereby the transport vehicle comprises at least one further ventilating fan (18), situated in or on the rear wall (7) of the compartment (3), **characterized in that** the further ventilating fan is set up in such a way that it extracts air from the compartment (3).

2. Transport vehicle (1) according to claim 1, **characterized in that** the transport vehicle comprises means for alternately activating the air fans in or on the front and the rear wall of the compartment.

3. Transport vehicle (1) according to one of the preceding claims, **characterized in that** there are a number of floors (25) in the compartment (3) and the transport vehicle (1) comprises in addition to the ventilating fan (17) mentioned, a number of additional ventilating fans (17) which are distributed vertically in the front wall (5), and in addition to the further ventilating fan (18) mentioned, a number of additional further ventilating fans (18), which are distributed vertically in the rear wall (17) and which transport vehicle comprises in addition to the air vent (19) mentioned, a number of additional air vents (19) which are distributed vertically in the rear wall (7) adjacent the further ventilating fans (18) , whereby the rear wall (7) is executed as one or more doors (8) and that there is a movable closing device (27) in the compartment (3) at the rear for closing off a part of the rear from the floor (11) upwards when the doors (8) are open, and a moving resistance device (36), through which the air flowing into the compartment (3) encounters resistance, for covering a part of the rear from the roof (9) downwards when the doors (8) are open.

4. Transport vehicle according to claim 3, **characterized in that** the resistance device (36) is a perforated plastic covering.

5. Transport vehicle (1) according to claim 3 or 4, **characterized in that** the closing device (27) comprises a plastic covering (29) that can be rolled up, which extends over the entire width of the compartment (3).

6. Method for ventilating a compartment (3) of a transport vehicle (1), which compartment, as viewed in the direction of travel, has a front wall (5) and a rear wall (7), as well as a roof (9), a floor (11) and two side walls (13), in which method air is extracted from the compartment (3) through openings in the front wall (5) of the compartment (3), **characterized in that** air is also extracted from the compartment (3) through openings in the rear wall (7) of the compartment, whereby the air is extracted alternately during a period through the openings in the front wall (5) and a period through the openings in the rear wall (7).

7. Method according to claim 6, **characterized in that** just after the compartment (3) is filled with animals and the rear door or doors (8) is/are closed first the air is exhausted through the openings in the rear wall (7) during a longer period than during the alternately venting through the openings in the front and rear wall (5, 7).

## Patentansprüche

1. Transportfahrzeug (1), insbesondere für die Beförderung von Hühnern, bestehend aus einem Abteil (3), das sich, in Fahrtrichtung gesehen, aus einer Stirnwand (5) und einer Rückwand (7) sowie einem Dach (9), einem Fußboden (11) und zwei Seitenwänden (13) zusammensetzt, wobei das Transportfahrzeug (1) ferner mindestens ein Gebläse (17) umfasst, das in oder an der Stirnwand (5) angeordnet ist, sowie mindestens eine Belüftungsöffnung (19) in einer der Wände des Abteils (3) für die Zufuhr oder Ableitung von Luft, und wobei das Gebläse (17) so angeordnet ist, dass damit Luft aus dem Abteil (3) abgesaugt wird, und wobei das Transportfahrzeug (1) mindestens ein weiteres Gebläse (18) umfasst, das sich in oder an der Rückwand (7) des Abteils (3) befindet, **dadurch gekennzeichnet, dass** das weitere Gebläse so angeordnet ist, dass damit Luft aus dem Abteil (3) abgesaugt wird.

2. Transportfahrzeug (1) nach Anspruch 1, **dadurch gekennzeichnet, dass** das Transportfahrzeug Mittel für die wechselweise Aktivierung der in oder an der Stirnwand und der Rückwand des Abteils angeordneten Gebläse umfasst.

3. Transportfahrzeug (1) nach einem der vorangegangenen Ansprüche, **dadurch gekennzeichnet, dass** in dem Abteil (3) mehrere Etagen (25) vorhanden sind und das Transportfahrzeug (1) neben dem erwähnten Gebläse (17) mehrere zusätzliche Gebläse (17) umfasst, die übereinander verteilt in der Stirnwand (5) angebracht sind, und neben dem erwähnten weiteren Gebläse (18) mehrere zusätzliche weitere Gebläse umfasst, die übereinander verteilt in der Rückwand (7) angebracht sind, wobei das Transportfahrzeug neben der erwähnten Belüftungsöffnung (19) mehrere weitere Belüftungsöffnungen (19) umfasst, die sich übereinander verteilt neben den weiteren Gebläsen (18) in der Rückwand (7) befinden, wobei die Rückwand (7) in Form einer oder mehrerer Türen (8) ausgeführt ist und an der Rückseite des Abteils (3) verschiebbare Schließvorrichtungen (27) vorhanden sind, mit denen ein Teil der Rückseite bei geöffneten Türen (8) von dem Fußboden (11) aus nach oben hin geschlossen werden kann, sowie bewegliche Widerstandsmittel (36), die bewirken, dass die in das Abteil (3) einströmende Luft auf Widerstand trifft, damit ein Teil der Rückseite bei geöffneten Türen (8) vom Dach (30) aus nach unten hin geschlossen werden kann.

4. Transportfahrzeug (1) nach Anspruch 3, **dadurch gekennzeichnet, dass** die Widerstandsmittel (36) durch eine perforierte Kunststofffolie gebildet werden.

5. Transportfahrzeug (1) nach einem der Ansprüche 3 oder 4, **dadurch gekennzeichnet, dass** die Schließvorrichtungen (27) eine aufrollbare Kunststofffolie (29) umfassen, die über die gesamte Breite des Abteils (3) reicht.

6. Arbeitsverfahren für die Belüftung eines Abteils (3) in einem Transportfahrzeug (1), das sich, in Fahrtrichtung gesehen, aus einer Stirnwand (5) und einer Rückwand (7) sowie einem Dach (9), einem Fußboden (11) und zwei Seitenwänden (13) zusammensetzt, wobei im Verlauf dieses Verfahrens über in der Stirnwand (5) des Abteils (3) befindliche Öffnungen Luft aus dem Abteil (3) gesaugt wird, **dadurch gekennzeichnet, dass** auch über in der Rückwand (7) des Abteils befindliche Öffnungen Luft aus dem Abteil (3) gesaugt wird, wobei die Luft während einer bestimmten Zeitspanne wechselweise durch die Öffnungen in der Stirnwand (5) und durch die Öffnungen in der Rückwand (7) gesaugt wird.

7. Arbeitsverfahren nach Anspruch 6**, dadurch gekennzeichnet, dass** unmittelbar nach der Beladung des Abteils (3) mit Tieren und dem Schließen der Hecktür oder Hecktüren (8) zunächst Luft über die Öffnungen in der Rückwand (7) abgesaugt wird, wobei dieser Vorgang länger dauert als die anschließende wechselweise Belüftung durch die Öffnungen in der Stirnwand und der Rückwand (5, 7).

## Revendications

1. Véhicule de transport (1), plus spécialement destiné au transport de poulets, comprenant un compartiment (3) comportant, vu dans le sens de la marche, un panneau avant (5) et un panneau arrière (7), ainsi qu'un toit (9), un plancher (11) et deux panneaux latéraux (13), ledit véhicule de transport (1) étant par ailleurs doté d'au moins un ventilateur (17) monté dans ou sur le panneau avant (5), ainsi que d'au moins une ouverture d'aération (19) prévue dans l'une des parois du compartiment (3) et destinée à amener l'air frais ou à évacuer l'air vicié, le ventilateur (17) étant placé de manière à aspirer l'air du compartiment (3), et le véhicule de transport étant doté d'au moins un ventilateur supplémentaire (18) monté dans ou sur le panneau arrière (7) du compartiment (3), ce ventilateur supplémentaire présentant la caractéristique d'être réglé de manière à aspirer l'air du compartiment (3).

2. Véhicule de transport (1) selon la revendication 1, **caractérisé en ce que** des dispositifs permettent d'activer alternativement les ventilateurs montés dans ou sur le panneau avant et le panneau arrière du compartiment.

3. Véhicule de transport (1) selon l'une des revendications précédentes, **caractérisé en ce que** le compartiment (3) est divisé verticalement en un certain nombre d'étages (25), le véhicule de transport (1) comportant, outre le ventilateur susmentionné (17), un certain nombre de ventilateurs supplémentaires (17), répartis verticalement sur le panneau avant (5), et, outre le ventilateur supplémentaire susmentionné (18), un certain nombre de ventilateurs supplémentaires répartis verticalement sur le panneau arrière (7), ledit véhicule de transport comportant, outre l'ouverture d'aération susmentionnée (19) un certain nombre d'ouvertures d'aération supplémentaires (19) réparties verticalement sur le panneau arrière (7) à côté des ventilateurs supplémentaires (18), le panneau arrière (7) étant lui-même réalisé sous forme d'une ou plusieurs portes (8) et le côté arrière du compartiment (3) comportant des dispositifs de fermeture mobiles (27) qui permettent, les portes étant ouvertes (8), de fermer une partie de l'arrière en allant du plancher (11) vers le haut, ainsi que des dispositifs mobiles de résistance à l'air (36), grâce auxquels l'air qui afflue dans le compartiment (3) rencontre une résistance, et destinés, les portes étant ouvertes, à fermer partiellement l'arrière à partir du toit (9) et en allant vers le bas.

4. Véhicule de transport (1) selon la revendication 3, **caractérisé en ce que** qu'il possède des dispositifs de résistance à l'air (36) constitués par une feuille de plastique perforé.

5. Véhicule de transport (1) selon la revendication 3 ou 4, **caractérisé en ce que** les dispositifs de fermeture (27) comportent une feuille de plastique enroulable (29) de même largeur que le compartiment (3).

6. Méthode de ventilation d'un compartiment (3) de véhicule de transport (1), ledit compartiment comprenant, vu dans le sens de la marche, un panneau avant (5) et un panneau arrière (7), ainsi qu'un toit (9), un plancher (11) et deux panneaux latéraux (13), méthode selon laquelle l'air du compartiment (3) est aspiré par les ouvertures prévues dans le panneau avant (5) du compartiment (3), l'air du compartiment (3) étant de même aspiré par les ouvertures prévues dans le panneau arrière (7) du compartiment (3), méthode **caractérisée en ce que** l'air est aspiré alternativement pendant une période donnée par les ouvertures du panneau avant (5) et par les ouvertures du panneau arrière (7).

7. Méthode, selon la revendication 6, **caractérisée en ce que** l'air ne commence à être aspiré par l'intermédiaire des ouvertures du panneau arrière (7) que lorsque le compartiment (3) a reçu son chargement d'animaux, et que la ou les portes arrière (8) sont refermées, la période d'aspiration durant plus longtemps que la ventilation alternative qui s'effectue ensuite par l'intermédiaire des ouvertures des panneaux avant et arrière (5, 7).
